# EUROPEAN PATENT APPLICATION

(11) **EP 1 610 543 A1**
(43) Date of publication of application: **28.12.2005**
(21) Application number: 05253865.9
(22) Date of filing: 22.06.2005
(51) Int. Cl.: H04N 5/00

(54) **Method and apparatus for reducing the power consumption of a digital set-top box in standby mode**

(30) Priority: 25.06.2004 KR 2004048292
(71) Applicant: SAMSUNG ELECTRONICS CO., LTD., Suwon-si, Gyeonggi-do (KR)
(72) Inventor: Shin, Dong-in, Yeongtong-gu, Suwon-si Gyeonggi-do (KR)
(74) Representative: Robinson, Ian Michael

(57) **Abstract**

A method and apparatus for reducing power consumption of a digital set-top box (STB) during a standby mode are provided. The method includes the steps of receiving a multimedia signal, the multimedia signal having an audio signal and a video signal, demultiplexing the multimedia signal into the audio signal and the video signal and decoding the audio and video signals, and selectively amplifying at least one of the decoded audio signal and the decoded video signal depending on a power mode of the digital STB and outputting the resulting audio and video signals, wherein the power mode comprises a standby mode and an on mode.

## Description

The present invention relates to a method and apparatus for reducing the power consumption of a digital set-top box in standby.

Recent developments in digital technologies have allowed satellite, cable, and terrestrial wave broadcasters to provide digital broadcasts. Satellite broadcasting enables networks to be relatively easily constructed and provides consumers with a choice of several hundred digital broadcast channels. The development and advancement of satellite broadcasting has promoted the digitalization of cable broadcasting.

Cable broadcasting has more advantages than satellite broadcasting regarding the provision of bi-directional services, even though cable broadcasting requires a considerable amount of time and money to establish new networks. In addition, the digitalization of terrestrial broadcasting is under way as major investments have been made therein. However, it is expected to take more time to digitalize terrestrial broadcasting than to digitalize satellite and cable broadcasting.

With the advent of digital broadcasting, customer demand for a large variety of services has dramatically grown worldwide. In order to fulfill this demand, many digital broadcast receivers have been developed. Currently, domestic broadcasters are also promoting digitalization. However, in order to produce and transmit digital broadcast programs, capital investments are necessary, which has hindered many broadcasters from meeting customer demand.

By taking advantage of a wider variety of broadcast programs, early cable broadcasters opened new broadcasting stations with a smaller amount of investment than the amount spent by terrestrial broadcasters to open their broadcasting stations. In order for users to watch cable broadcast programs, the users are required to have a special device called a set-top box (STB). Analog STBs, which are classified as the first generation of STBs, were only capable of unidirectionally receiving cable broadcast programs from cable broadcasting stations.

In order to receive digital broadcast programs, which are characterized by higher audio and video qualities and hundreds of television (TV) channels, digital STBs are necessary. Digital STBs, which are classified as the second generation of STBs, provide a set of well-defined functions and additional services so that they can be successfully redefined as home appliances.

A digital STB is both a digital broadcast receiver that receives various types of digital broadcast programs such as satellite, cable, or terrestrial broadcast programs, and a digital multimedia device that transmits a digital broadcast (video/audio) signal compressed in MPEG-2 format to a display device, such as a TV set. In order words, a digital STB is a type of signal converter for receiving digital broadcast programs.

MPEG-2 is an image compression standard for digital storage mediums, networks, communication, and broadcasting. In addition, MPEG-2 is also a moving image compression standard for DVDs, digital TVs, satellite broadcasting, and digital cable broadcasting.

In most cases, digital broadcast programs can be viewed by connecting a digital STB to a conventional TV set. Even though STBs have initially been designed to simply receive digital satellite, cable, and terrestrial broadcast programs, they are expected to be further developed to provide high-functionality broadcasting, interactive, bi-directional broadcasting, facilitate access to the Internet, and serve as personal storage mediums.

High-functionality broadcasting is partly bi-directional and provides, for example, program guides, games, and weather forecasts. Bi-directional broadcasting has gradually broadened its applicability to pay-per-view programs, remote shopping, remote games, remote banking services, quizzes, and bi-directional advertisements. Currently, web browsing and e-mail services are realized in digital TVs. Given that integration of broadcasting technology with communication technology is being aggressively promoted and implemented, digital STBs are expected to become one of the most common devices enabling access to the Internet. Recently, STBs have been manufactured to have a hard disk drive (HDD) installed therein, which has dramatically changed users' ways of watching TV. Thus, the users can store broadcast programs of interest in the HDD and watch the stored broadcast programs whenever they want. In addition, the STBs equipped with an HDD can provide a time shifting function so that a user who has stopped watching the TV program can resume watching an unwatched portion of the TV program at a later time. In the near future, home electronic appliances are expected to be connected to a home network, and digital STBs are expected to be further developed to play a significant role in such a home network.

One of the most important factors to be considered when designing digital STBs with a variety of functions is power consumption. Digital STBs receive not only broadcast programs but also data and other broadcast-related audio or video signals. Therefore, when not outputting video or audio signals, digital STBs may consume a considerable amount of power to execute a variety of functions. In a standby mode, conventional STBs unnecessarily consume power to output a black video signal, even though they are not outputting any images. According to the Energy Star criteria, STBs are required to consume only 7 watts or less of power in standby mode.

Therefore, in order to meet the Energy Star criteria, it is necessary to develop a method and apparatus to reduce the power consumption of STBs in the standby mode.

According to the present invention there is provided an apparatus and method as set forth in the appended claims. Preferred features of the invention will be apparent from the dependent claims, and the description which follows.

The present invention provides a method and apparatus that reduce the power consumption of a set-top box (STB) in the standby mode.

The present invention also provides a method and apparatus that reduce the number of signals unnecessarily output in the standby mode.

Other objects, features and advantages, of the present invention will become clear to those skilled in the art upon review of the following description, the attached drawings and appended claims.

In accordance with an aspect of the present invention, there is provided a method of reducing power consumption of a digital set-top box (STB), the method comprising receiving a multimedia signal, the multimedia signal comprising an audio signal and a video signal, demultiplexing the multimedia signal into the audio signal and the video signal and decoding the audio and video signals, and selectively not amplifying or amplifying at least one of the decoded audio signal and the decoded video signal depending on a power mode of the digital STB and outputting the resulting audio and video signals, wherein the power mode comprises a standby mode and an on mode, respectively.

In accordance with another aspect of the present invention, there is provided a digital STB comprising a broadcast signal receipt module, which receives a multimedia signal comprising an audio signal and a video signal, a demultiplexer, which demultiplexes the multimedia signal into the audio signal and the video signal, a decoder, which decodes the audio and video signals, and an amplification module, which selectively not amplifies or amplifies at least one of the decoded audio and video signals depending on a power mode of the digital STB, wherein the power mode comprises a standby mode and an on mode, respectively.

The above and other features and advantages of the present invention will become more apparent by describing in detail exemplary embodiments thereof with reference to the attached drawings in which:
Figure 1 is a diagram illustrating power modes of a set-top box (STB) according to an exemplary embodiment of the present invention;
Figure 2 is a block diagram of an STB according to an exemplary embodiment of the present invention;
Figure 3 is a circuit diagram of a transistor of the video amplification module of Figure 2;
Figure 4 is a detailed block diagram of the video amplification module of Figure 2;
Figure 5 is a detailed block diagram of a power control portion of the STB according to an embodiment of the present invention shown in Figure 2, which can cut off the power supplied to a video amplification module of the STB;
Figure 6 is a flowchart of a method for reducing power supplied to a video amplification module in standby mode according to an exemplary embodiment of the present invention;
Figure 7 is a flowchart of a method for reducing the power supplied to a video amplification module in standby mode, which is performed in the STB of Figure 2; and
Figure 8 is a flowchart of a method for reducing the power supplied to a video amplification module in standby mode, which is performed in the STB of Figure 5.

Throughout the drawings, it should be understood that like reference numbers refer to like features, structures and elements.

In embodiments of the present invention, the term "module", as used herein, means, but is not limited to, a software or hardware component such as a Field Programmable Gate Array (FPGA) or an Application Specific Integrated Circuit (ASIC), which performs certain tasks. The module may advantageously be configured to reside on an addressable storage medium and configured to execute on one or more processors. Thus, a module may include, by way of example, components such as software components, object-oriented software components, class components, task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. Terms frequently used in this disclosure will now be described in more detail.

### Standby Mode

There are three power modes of an STB: off, on, and standby. In the off mode, the power supplied to modules of the STB is cut off. In the on mode, a user can respectively view or listen to video or audio data provided via the STB. Standby mode is an intermediate mode between on and off. In the standby mode, the STB performs its operations with the exception of an operation of outputting a broadcast program. The user sees a black screen as if the STB is not outputting anything to the screen. However, in the standby mode the STB transmits a black video signal that makes the screen turn black. In the standby mode, the STB is standing by ready to output a broadcast program.

### Amplifier

An amplifier is a module for amplifying a signal input thereto. A signal input via a wire or wireless manner may be attenuated, or it may contain noise, it is undesirable to output the input signal without appropriately processing. Thus, it is necessary to appropriately amplify the input signal to be suitably used. An amplifier amplifies a signal using a voltage or current. That is, the voltage or current is applied to the input and the output ports of the amplifier such that the voltage applied to the output port is greater than that applied to the input port, thereby amplifying the input signal in order to output an amplified signal. In a video/audio device, the amplifier amplifies a video/audio signal. An STB includes a video amplifier, which amplifies a video signal in a broadcast signal, and an audio amplifier, which amplifies an audio signal in the broadcast signal. Embodiments of the present invention will be described later in further detail using a video amplifier as an example of the amplifier. However, the amplifier is not restricted to a video amplifier and other types of amplifiers, such as an audio amplifier, can be used.

### Manipulation Signal and Control Signal

A manipulation signal is input to an STB via a remote controller or a timer, and then the STB operates in response to the manipulation signal. A control signal is transmitted between modules of the STB in order to control the modules of the STB. When the STB receives the manipulation signal via the remote controller, a controller of the STB, which controls the rest of the STB, transmits the control signal to one of the modules of the STB that needs to be controlled. Depending on the type of the STB, the manipulation signal may be converted into the control signal or may be transmitted as the control signal between the modules of the STB.

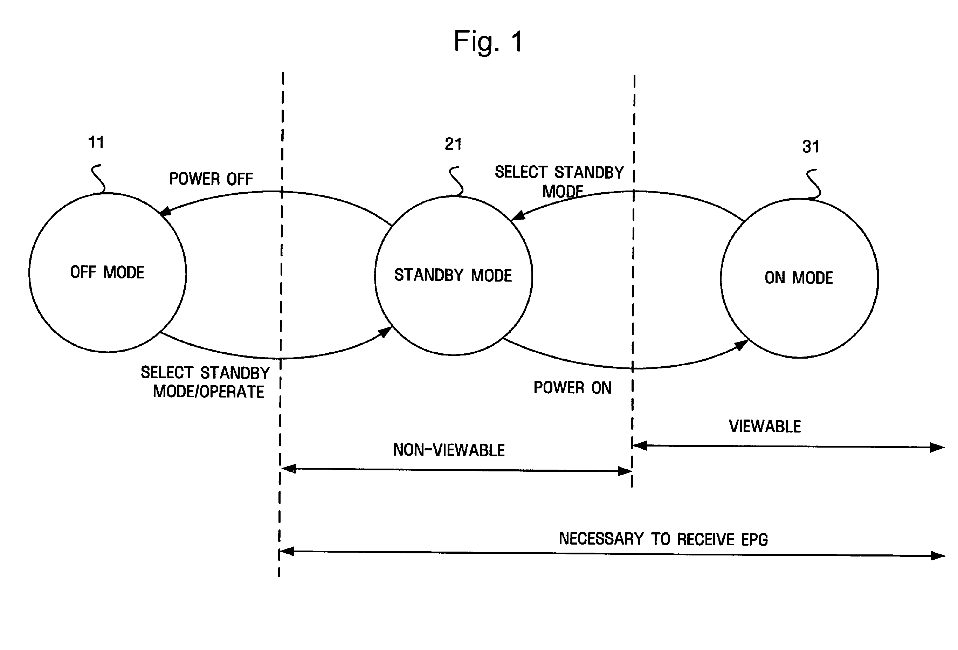

Figure 1 is a diagram illustrating power modes of a set-top box (STB) according to an exemplary embodiment of the present invention. An STB may have three power modes: off mode 11, standby mode 21, and on mode 31. In the off mode 11, power is not supplied to most of the modules of the STB. In the off mode 11, some of the modules of the STB, such as an inner scheduler or timer, and a manipulation signal receiver are still powered. The modules of the STB operate in the off mode 11 may be determined depending on the type of the STB. Immediately after the STB is switched to the standby mode 21 from the off mode 11, the STB supplies power to the modules that need to be powered on and checks the state of the corresponding modules. In addition, in the standby mode 21 the STB performs operations for receiving audio/video signals and receives an electronic program guide (EPG). Once all the modules are powered and a monitoring operation of the corresponding modules states is completed, and the STB is switched to the on mode 31. Depending on the type of the STB, a manipulation signal may be needed to switch the STB from the standby mode 21 to the on mode 31. While listening/watching a reproduction of audio/video data, a user may switch the STB from the on mode 31 to the standby mode 21 and then stop listening/watching the reproduced audio/video data. In the standby mode 21, the STB does not provide any video/audio data to the user but performs operations such as receiving the EPG. Therefore, the STB sends a black video signal, rather than a typical audio/video signal, to the screen and the screen turns black.

In the conventional standby mode, an STB outputs a unique video signal, which is different from other regular video signals, so that the screen turns black. This unique video signal is called a black video signal. Thus, a user sees a black screen and believes the display module is not displaying any signals. But, in the conventional standby mode the display module displays black images. In order to output video signals, the STB amplifies the video signals using an amplifier, regardless of whether or not the video signals are black video signals. Therefore, in the conventional standby mode, the STB unnecessarily consumes power by amplifying black video signals even though the black video signals do not have any data to be processed.

In the present embodiment, in the standby mode 21, the STB does not output any video signal to a video output module, and the output of a video amplification module is greatly reduced. In other words, the STB does not send a video signal to the video output module or the STB outputs a video signal to the video output module, but the signal is too weak to make the video output module operate normally. As a result, it prevents the STB from unnecessarily consuming power by amplifying the video signal, and a user views the same black screen as in the conventional standby mode.

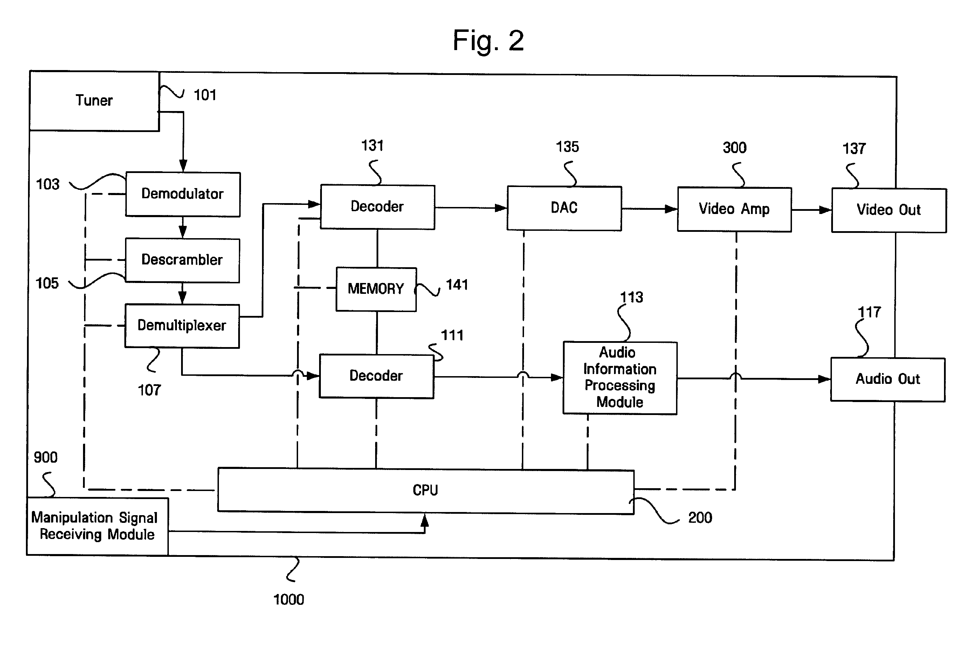

Figure 2 is a block diagram of an STB according to an exemplary embodiment of the present invention.

Referring to Figure 2, a manipulation signal receipt module 900 issues a command to turn on or off the STB 1000 and receives a signal input via a remote controller or an external panel equipped with buttons.

A tuner 101 receives a video signal, an audio signal, or data from a satellite, terrestrial, or cable broadcasting station, and transmits the video signal, the audio signal, or the data to a demodulator 103.

The demodulator 103 converts an analog signal input thereto into a digital signal by sampling the analog signal, and then transmits the digital signal either directly to a demultiplexer 107 or via a descrambler 105.

The descrambler 105 descrambles a signal, which has been previously scrambled, by using key information obtained from an integrated circuit (IC) card (not shown). Scrambling, which is usually performed on pay-per-view broadcast programs, for example, is a process of converting signals or mixing the signals together. Therefore, a user cannot watch scrambled signals without the help of a descrambler.

The demultiplexer 107, which is a kind of filter, extracts signals corresponding to a channel selected by the user from among a number of signals corresponding to various channels input via the tuner 101, and then transmits the extracted signals to both a video decoder 131 and an audio decoder 111.

The video decoder 131 decodes video signals from among the extracted signals. The video decoder 131 decodes the video signals by using a memory 141 because decoding the video signals requires a large amount of computation and a large amount of memory capacity. The memory 141 may be a random access memory (RAM), which is readable and writable. The video signals decoded by the video decoder 131 may be converted into analog signals by a digital-to-analog converter (DAC) 135 and then output. Alternatively, the decoded video signals may be processed to be compatible with the National Television Systems Committee (NTSC) standard or the Phase Alternating Line (PAL) standard, converted into analog signals by the DAC 135, and then output.

The audio decoder 111 decodes audio signals from among the extracted signals. The audio decoder 111, like the video decoder 131, needs the memory 141 to decode the audio signals. The decoded audio signals are converted to signals in a predetermined output format by an audio information processing module 113 and then output via an audio output module 117.

Since the video signals, which are converted into analog signals by the DAC 135, are weak, they need to be amplified by a video amplification module 300 before being output.

A video output module 137 and the audio output module 117, which respectively output final video signals and final audio signals, are connected to an input terminal of an external display module (not shown) and an input terminal of an external audio device (not shown), respectively.

A central processing module (CPU) 200 both controls other modules of the STB 1000 so that they can exchange information with one another, and processes this exchanged information.

In the present embodiment, when the CPU 200 informs the video amplification module 300 that the STB 1000 has entered the standby mode, the video amplification module 300 does not amplify any signals input thereto.

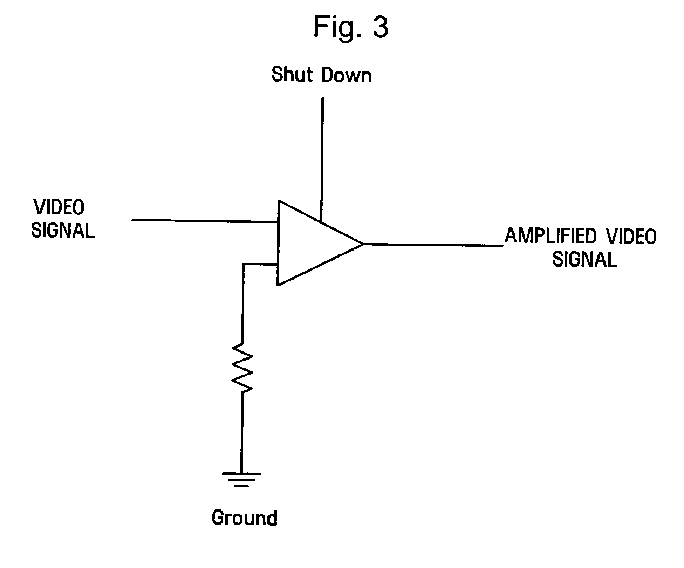

Figure 3 is a circuit diagram of a transistor of the video amplification module 300 of Figure 2.

Referring to Figure 3, a video signal, which is input to the transistor as soon as the transistor is turned on, is amplified by the transistor and then output. The input video signal may be prevented from being amplified by the transistor by applying a shutdown signal to the transistor. When the shutdown signal, which is a type of a power supply signal, is applied to the transistor, the transistor is prevented from consuming power because it is disconnected from the video amplification module 300. Therefore, it is possible to reduce the power consumption of the STB during the standby mode by applying the shutdown signal to each transistor of the video amplification module 300.

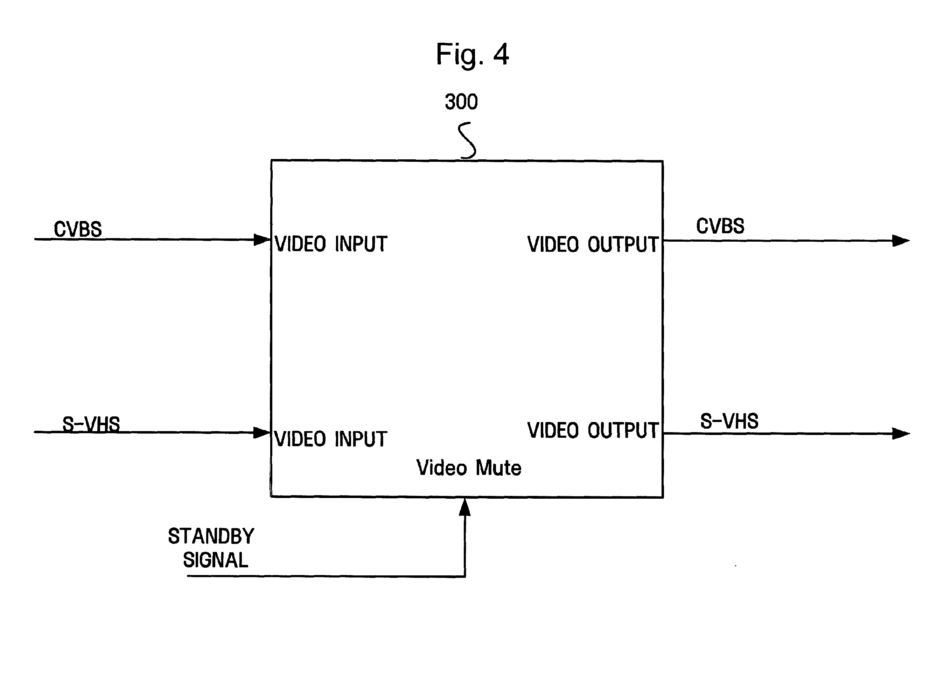

Figure 4 is a detailed block diagram of the video amplification module 300 of Figure 2. Referring to Figure 4, the video amplification module 300 receives a video signal, such as a composite video burst sync (CVBS) signal or a super video home system (SVHS) signal, amplifies the received video signal by using transistors thereof (such as the transistor of Figure 3), and outputs the amplified signal. The inner structure of the video amplification module 300 may vary depending on the type of the video amplification module 300. The video amplification module 300 may include various circuit elements other than the transistors.

When receiving a standby signal, the video amplification module 300 does not amplify video signals input thereto. In the standby mode, the video amplification module 300 does not output any signals, instead of amplifying and outputting a black video signal. However, there is no difference or very little difference between outputting nothing and outputting a black signal to display device, such as a TV set which is connected to the video output module 137, during the standby mode.

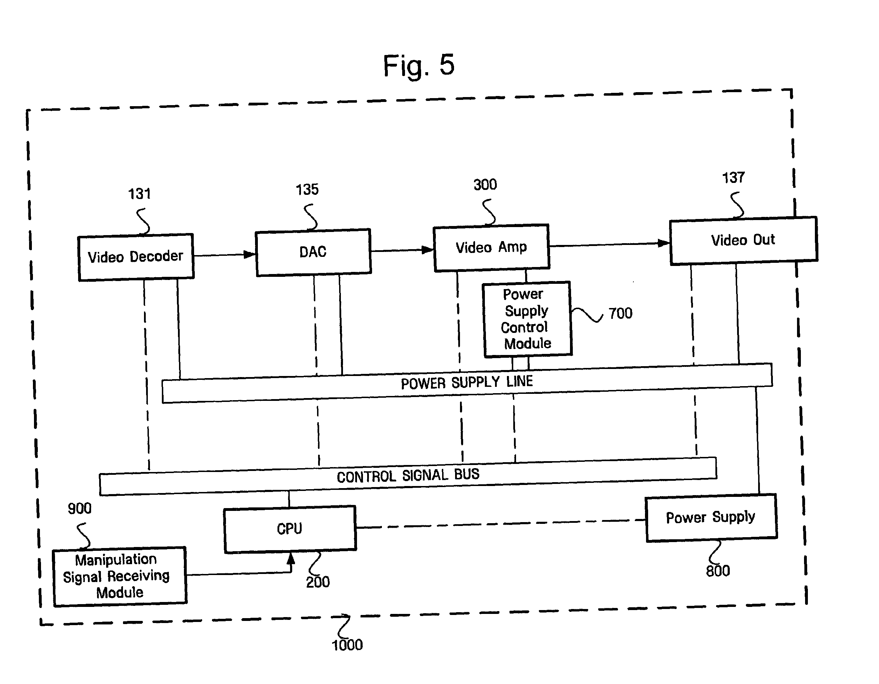

Figure 5 is a detailed block diagram of a power control portion of the STB shown in Figure 2 according to an embodiment of the present invention, which can cut off the power supplied to a video amplification module in the STB.

The STB shown in Figure 5 is similar to the STB shown in Figure 2. A power supply module 800 illustrated in Figure 5 is not illustrated in Figure 2. An encoded video signal, which has been processed by a demultiplexer, is decoded by a video decoder 131. The decoded video signal is converted into an analog signal by a DAC 135 and then output. Since the video signal output from the DAC 135 is weak, it needs to be amplified by a video amplification module 300.

The power supply module 800 supplies power to various modules of the STB 1000' and is controlled by a CPU 200. When a manipulation signal receiving module 900 receives a command to turn off the respective modules of the STB 1000', the CPU 200 sends a command to the power supply module 800 to cut off the power supplied to the respective modules of the STB. Accordingly, the power supplied to each module of the STB 1000' is cut off, and each module of the STB 1000' stops operating. Thereafter, when the manipulation signal receiving module 900 receives a signal requesting a standby mode or when the STB 1000' is switched to the standby mode by an internal timer, the CPU 200 controls a power supply control module 700 to cut off the power supplied to the video amplification module 300.

In the illustrative embodiment, unlike in the previous embodiment, the power supplied to each module of the STB 1000' is controlled by an external module, thus reducing the power consumption of the STB 1000' during the standby mode.

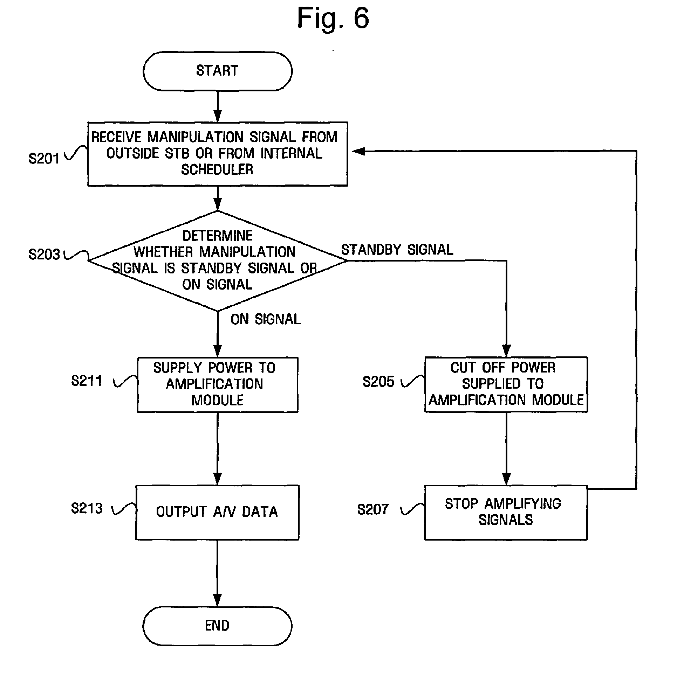

Figure 6 is a flowchart of a method for reducing power supplied to a video amplification module according to an exemplary embodiment of the present invention.

Referring to Figure 6, in operation S201, a manipulation signal is input by a remote controller or an external panel equipped with buttons or is input by an internal scheduler in operation S201.

In operation S203, a control module, such as a CPU, determines whether the manipulation signal is a standby signal.

In operation S205, power supplied to a video amplification module is cut off if the manipulation signal is a standby signal. The power supplied to the video amplification module may also be cut off by a power supply control module disposed outside the video amplification module or by the video amplification module by applying a shutdown signal to its transistors, as illustrated in Figure 3.

In operation S207, when the power supplied to the video amplification module is cut off, the video amplification module stops amplifying signals input thereto, and no video signal is output to a video output module.

In operation S203, if the manipulation signal is an on signal, which enables a user to watch video data in operation S203, power is supplied to the video amplification module in operation S211.

In operation S213, video signals are output.

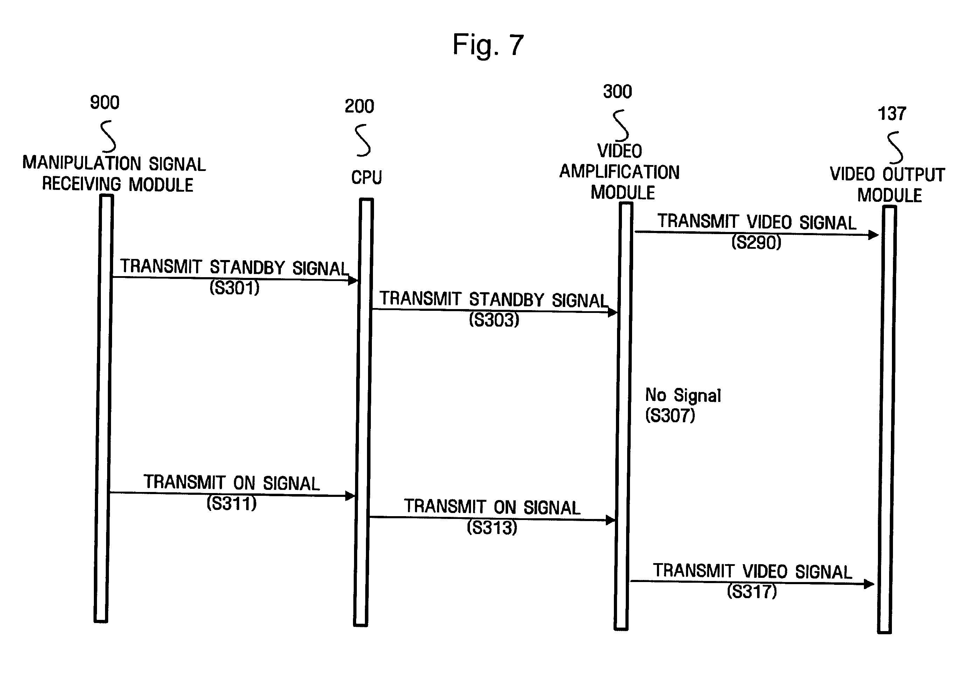

Figure 7 is a flowchart of a method for reducing power supplied to a video amplification module, which is performed by the STB of Figure 2.

Referring to Figure 7, in operation S290, if a current power mode of the STB is not a standby mode but an on mode, the video amplification module amplifies a video signal and then transmits the amplified video signal to the video output module 137.

In operation S301, the manipulation signal receiving module 900 transmits a standby signal, which it has received from an external or internal scheduler or a timer, to the CPU 200.

In operation S303, the CPU 200 transmits the standby signal to the video amplification module 300. The video amplification module 300 transmits a shutdown signal to transistors thereof so that they can be shut down.

In operation S307, due to the shutdown signal, the video amplification module 300 stops both amplifying signals input thereto and transmitting the amplified signals to the video output module 137. As a result, the power consumption of the transistors of the video amplification module 300 can be reduced.

In operation S311, the manipulation signal receiving module 900 transmits an on signal to the CPU 200.

In operation S313, the CPU 200 transmits the on signal to the video amplification module 300.

In operation S317, the video amplification module 300 supplies power to the transistors thereof, which had been shut down, so that it can resume both amplifying video signals input thereto and outputting the amplified video signals to the video output module 137.

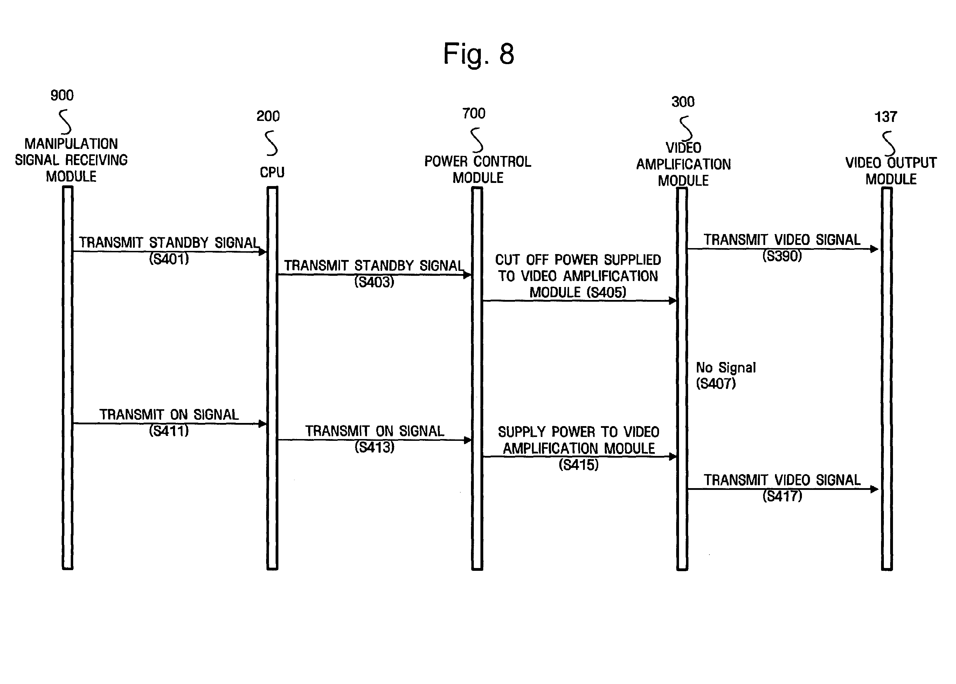

Figure 8 is a flowchart of a method for reducing the power supplied to a video amplification module, which is performed by the STB of Figure 5.

The method of Figure 8 is similar to the method of Figure 7. In the on mode, the video amplification module 300 amplifies a video signal and transmits the amplified video signal to the video output module 137 in operation S390.

In operation S401, the manipulation signal receiving module 900 transmits a standby signal, among various signals that it has received from an external or internal scheduler or a timer, to the CPU 200.

In operation S403, the CPU 200 transmits the standby signal to the power supply control module 700.

In operation S405, the power supply control module 700 cuts off power supplied to the video amplification module.

In operation S407, the video amplification module 300 stops outputting video signals.

In operation S411, the manipulation signal receiving module 900 transmits an on signal to the CPU 200 during the standby mode.

In operation S413, the CPU 200 transmits a control signal to the power supply control module 700 indicating that the STB has switched from the standby mode to the on mode.

In operation S417, the power supply control module 700 supplies power to the video amplification module 300 so that the video amplification module 300 can resume amplifying video signals input thereto and transmitting the amplified video signals to the video output module 137.

According to an embodiment of the present invention, a voltage of 5 V is supplied to the video amplification module of the STB, and only an insignificant amount of current remains in the video amplification module when the current supplied to the video amplification module is cut off during the standby mode. Accordingly, during the standby mode, the STB consumes approximately 5 V × several mA of power, which is insignificant. Therefore, it is possible to reduce the power consumption of the STB during the standby mode.

In concluding the detailed description, those skilled in the art will appreciate that many variations and modifications can be made to the preferred embodiments without substantially departing from the principles of the present invention. Embodiments of the present invention provide a method and apparatus for cutting off power supplied to a module for amplifying video or audio signals (for example, a video amplification module). However, the present invention should not be considered restricted to the embodiments thereof set forth herein. The scope of the invention is, therefore, indicated by the appended claims rather than by the foregoing description. All changes which come within the meaning and range of equivalency of the claims are to be embraced within their scope.

According to embodiments of the present invention, it is possible to reduce the power consumption of an STB during a standby mode.

In addition, the STB incorporating embodiments of the present invention can meet international standards regarding power consumption.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of reducing power consumption of a digital set-top box (STB), comprising:
receiving a multimedia signal, the multimedia signal comprising an audio signal and a video signal;
demultiplexing the multimedia signal into the audio signal and the video signal and decoding the audio and video signals; and
selectively amplifying at least one of the decoded audio signal and the decoded video signal depending on a power mode of the digital STB and outputting the resulting audio and video signals, wherein the power mode comprises a standby mode and an on mode.

2. The method of claim 1, wherein if the power mode of the digital STB is the standby mode, the outputting of the resulting audio and video signals step comprises removing power from circuits in an amplification module (300) that amplifies signals input thereto.

3. The method of claim 1, wherein if the power mode of the digital STB is the standby mode, the outputting of the resulting audio and video signals step comprises removing power supplied to an amplification module (300) that amplifies at least one of the decoded audio and video signals.

4. The method of claim 3, further comprising the step of providing a power mode signal by a power supply control module (700) disposed outside the amplification module (300) or by the amplification module (300) by applying a shutdown signal to the amplification module transistors.

5. The method of any preceding claim, further comprising the steps of:
receiving a manipulation signal via the remote controller;
transmitting a control signal from a controller of an STB to at least one of the modules of the STB to turn off the at least one module of the STB.

6. The method of any preceding claim, further comprising the steps of:
receiving a command to turn off the respective modules of the STB by manipulation signal receiving module;
sending a command to the power supply module (500) to remove the power supplied to the respective modules of the STB, wherein the power supplied to each module of the STB is cut off, and each module of the STB stops operating.

7. A digital set-top box (STB) comprising:
a broadcast signal receiving module (101), which receives a multimedia signal comprising an audio signal and a video signal;
a demultiplexer (107), which demultiplexes the multimedia signal into an audio signal and an video signal;
a decoder (111, 131), which decodes the audio and video signals; and
an amplification module (300), which selectively amplifies at least one of the decoded audio and video signals depending on a power mode of the digital STB, wherein the power mode comprises a standby mode and an on mode.

8. The digital STB of claim 7, wherein if the power mode of the digital STB is the standby mode, the amplification module (300) does not amplify at least one of the decoded audio and video signals.

9. The digital STB of claim 7 or 8, wherein the STB further comprises:
a power supply control module (700), which controls power supplied to the amplification module (300), wherein if the power mode of the digital STB is the standby mode, the power supply control module (700) removes the power supplied to the amplification module (300).

10. The digital STB of claim 9, wherein the STB outputs substantially no video or audio signal if the power mode of the digital STB is in standby mode.

11. The digital STB of claim 7, wherein the STB further comprises:
a power supply control module (700) disposed outside the amplification module (300) applies a shutdown signal to the amplification module transistors.

12. The digital STB of claim 11, wherein the STB further comprises:
a manipulation signal receiving module for receiving a command to turn off the respective modules of the STB;
wherein the manipulation signal receiving module sends a command to the power supply control module (700) to remove the power supplied to the respective modules of the STB, wherein the power supplied to each module of the STB is cut off, and each module of the STB stops operating.

13. The digital STB of claim 7, wherein:
the amplification module (300) applies a shutdown signal to the amplification module transistors.
